# EUROPEAN PATENT APPLICATION

(11) **EP 4 642 061 A1**
(43) Date of publication of application: **29.10.2025**
(21) Application number: 24755828.1
(22) Date of filing: 04.01.2024
(51) Int. Cl.: H04W 4/14

(54) **MESSAGE INTERCEPTION METHOD AND APPARATUS**

(30) Priority: 17.02.2023 CN 202310185582
(71) Applicant: Huawei Technologies Co., Ltd., Shenzhen, Guangdong 518129 (CN)
(72) Inventor: YUAN, Ping, Shenzhen, Guangdong 518129 (CN); LV, Nengjie, Shenzhen, Guangdong 518129 (CN)
(74) Representative: Gill Jennings & Every LLP
(86) International application number: PCT/CN2024/070619
(87) International publication number: WO 2024/169452

(57) **Abstract**

A message interception method and apparatus are provided, to effectively intercept an unwanted message before the message arrives at a called terminal device, thereby avoiding a waste of network traffic of the terminal device. After receiving a first message sent to a first terminal device, a first device determines whether the first terminal device sets a message interception rule, and determines, based on a determining result of whether the first terminal device sets the message interception rule, whether to intercept the first message. According to the foregoing method, whether a message needs to be intercepted may be determined before the message arrives at the terminal device, avoiding a waste of network traffic of the terminal device.

## Description

### CROSS-REFERENCE TO RELATED APPLICATIONS

This application claims priority to Chinese Patent Application No. 202310185582.4, filed with the China National Intellectual Property Administration on February 17, 2023 and entitled "MESSAGE INTERCEPTION METHOD AND APPARATUS", which is incorporated herein by reference in its entirety.

### TECHNICAL FIELD

This application relates to the field of communication technologies, and in particular, to a message interception method and apparatus.

### BACKGROUND

5G messages are an upgrade of SMS services, and are basic telecommunication services provided by operators. Based on an internet protocol (internet protocol, IP) technology, the 5G messages implement a leap in service experience, support more media formats, and provide more abundant forms. As open messages, the 5G messages may be randomly sent between terminal devices or between a chatbot (chatbot) and a terminal device. Exchange of the 5G message is characterized by the following: Messages are sent between terminal devices, without a need that friends are added between the terminal devices; or messages are sent between a chatbot and a terminal device, without a need that the terminal device follows the corresponding chatbot.

As the 5G messages are more widely used, advertisement messages, junk messages, and the like are also increasing. Therefore, how to intercept a message that does not need to be obtained by a terminal device becomes an urgent problem to be resolved.

### SUMMARY

This application provides a message interception method and apparatus, to effectively intercept an unwanted message before a message arrives at a called terminal device, thereby avoiding a waste of network traffic of the terminal device.

According to a first aspect, this application provides a message interception method. The method may include: After receiving a first message sent to a first terminal device, a first device determines whether the first terminal device sets a message interception rule, and determines, based on a determining result of whether the first terminal device sets the message interception rule, whether to intercept the first message.

According to the foregoing method, before the message arrives at the terminal device, whether the message needs to be intercepted may be determined, so that a waste of network traffic of the terminal device can be avoided.

In a possible design, that a first device determines whether the first terminal device sets a message interception rule may include: The first device determines, based on a correspondence between a terminal device and whether a message interception rule is set, whether the first terminal device sets the message interception rule. In this way, the first device may accurately determine whether the first terminal device sets the message interception rule.

In a possible design, that a first device determines, based on a determining result of whether the first terminal device sets the message interception rule, whether to intercept the first message may include: If the first terminal device does not set the message interception rule, the first device determines not to intercept the first message; or if the first terminal device sets the message interception rule, the first device sends the first message to a second device, receives first indication information from the second device, and determines, based on the first indication information, whether to intercept the first message, where the first indication information indicates whether to intercept the first message. In this way, the first device may accurately determine whether the first message needs to be intercepted.

In a possible design, when the first device determines not to intercept the first message, the first device sends the first message to the first terminal device; or when the first device determines to intercept the first message, the first device deletes the first message. In this way, when the first message needs to be intercepted, the first message may not arrive at the first terminal device, to avoid the waste of network traffic of the first terminal device.

In a possible design, before receiving the first message sent to the first terminal device, the first device may receive second indication information from the second device, where the second indication information indicates that the first terminal device sets the message interception rule. Further, the first device may store a correspondence between the first terminal device and the message interception rule that is set. In this way, the first device may subsequently determine whether the first terminal device sets the message interception rule.

In a possible design, before receiving the second indication information from the second device, the first device receives, from the first terminal device, a message including the message interception rule set by the first terminal device, and sends, to the second device, the message including the message interception rule set by the first terminal device. In this way, the second device may store the message interception rule corresponding to the first terminal device, for subsequent interception determining of the first message.

In a possible design, the message interception rule may include one or more of the following: a blacklist, a keyword, a message type, or a message size. In this way, message interception in a plurality of manners may be implemented, interception is flexible, and interception effect is good.

According to a second aspect, this application provides a message interception method. The method may include: A second device receives, from the first device, a first message sent to a first terminal device, and determines, based on a message interception rule corresponding to the first terminal device, whether to intercept the first message. Further, the second device sends first indication information to the first device, where the first indication information indicates whether to intercept the first message.

According to the foregoing method, before the message arrives at the terminal device, whether the message needs to be intercepted may be determined, so that a waste of network traffic of the terminal device can be avoided.

In a possible design, before receiving, from the first device, the first message sent to the first terminal device, the second device sends second indication information to the first device, where the second indication information indicates that the first terminal device sets the message interception rule. In this way, the first device may subsequently determine whether the first terminal device sets the message interception rule.

In a possible design, before sending the second indication information to the first device, the second device receives, from the first device, a message including the message interception rule set by the first terminal device. Further, the second device stores the message interception rule set by the first terminal device. In this way, the second device may perform subsequent interception determining on the first message.

In a possible design, the message interception rule includes one or more of the following: a blacklist, a keyword, a message type, or a message size. In this way, message interception in a plurality of manners may be implemented, interception is flexible, and interception effect is good.

According to a third aspect, this application further provides a message interception apparatus. The message interception apparatus may be a first device. The message interception apparatus has a function of implementing the first aspect or the possible design examples of the first aspect. The function may be implemented by hardware, or may be implemented by hardware executing corresponding software. The hardware or the software includes one or more modules corresponding to the foregoing function.

In a possible design, a structure of the message interception apparatus includes a transceiver unit and a processing unit. These units may perform corresponding functions in the first aspect or the possible design examples of the first aspect. For details, refer to detailed descriptions in the method examples. Details are not described herein.

In a possible design, a structure of the message interception apparatus includes a communication interface and a processor, and optionally further includes a memory. The communication interface is configured to receive and send a message, and is configured to communicate and interact with another device in a system. The processor is configured to support the message interception apparatus in performing a corresponding function in the first aspect or the possible design examples of the first aspect. The memory is coupled to the processor, and the memory stores program instructions and data that are necessary for the message interception apparatus.

According to a fourth aspect, this application further provides a message interception apparatus. The message interception apparatus may be a second device. The message interception apparatus has a function of implementing the second aspect or the possible design examples of the second aspect. The function may be implemented by hardware, or may be implemented by hardware executing corresponding software. The hardware or the software includes one or more modules corresponding to the foregoing function.

In a possible design, a structure of the message interception apparatus includes a transceiver unit and a processing unit. These units may perform corresponding functions in the second aspect or the possible design examples of the second aspect. For details, refer to detailed descriptions in the method examples. Details are not described herein.

In a possible design, a structure of the message interception apparatus includes a communication interface and a processor, and optionally further includes a memory. The communication interface is configured to receive and send a message, and is configured to communicate and interact with another device in a system. The processor is configured to support the message interception apparatus in performing a corresponding function in the second aspect or the possible design examples of the second aspect. The memory is coupled to the processor, and the memory stores program instructions and data that are necessary for the message interception apparatus.

According to a fifth aspect, this application provides a system. The system may include a first device, a second device, and the like. The first device is configured to perform the corresponding function in the first aspect or the possible design examples of the first aspect. The second device is configured to perform the corresponding function in the second aspect or the possible design examples of the second aspect.

According to a sixth aspect, an embodiment of this application provides a computer-readable storage medium. The computer-readable storage medium stores program instructions; and when the program instructions are run on a computer, the computer is enabled to perform the method according to any one of the first aspect and the possible designs of the first aspect in embodiments of this application, or perform the method according to any one of the second aspect and the possible designs of the second aspect in embodiments of this application. For example, the computer-readable storage medium may be any usable medium that can be accessed by the computer. By way of example but not limitation, the computer-readable storage medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a seventh aspect, an embodiment of this application provides a computer program product. The computer program product includes computer program code or instructions. When the computer program code or the instructions are run on a computer, the method according to any one of the first aspect or the possible designs of the first aspect is performed, or the method according to any one of the second aspect or the possible designs of the second aspect is performed.

According to an eighth aspect, this application further provides a chip. The chip includes a processor. The processor is coupled to a memory, and is configured to read and execute program instructions stored in the memory, so that the chip implements the method according to any one of the first aspect or the possible designs of the first aspect, or implements the method according to any one of the second aspect or the possible designs of the second aspect.

For the foregoing aspects of the third aspect to the eighth aspect and technical effects that can be achieved in the foregoing aspects, refer to descriptions of technical effects that can be achieved in the first aspect or the possible solutions in the first aspect, or the second aspect or the possible solutions in the second aspect. Details are not repeatedly described herein again.

### BRIEF DESCRIPTION OF DRAWINGS

FIG. 1 is a diagram of an architecture of a system according to this application;
FIG. 2 is a flowchart of a message interception method according to this application;
FIG. 3 is a diagram of setting a message interception rule according to this application;
FIG. 4 is a diagram of a procedure of setting a message interception rule according to this application;
FIG. 5 is a diagram of message interception processing according to this application;
FIG. 6 is a diagram of another procedure of setting a message interception rule according to this application;
FIG. 7 is a diagram of a structure of a message interception apparatus according to this application; and
FIG. 8 is a diagram of a structure of a message interception apparatus according to this application.

### DESCRIPTION OF EMBODIMENTS

The following further describes in detail this application with reference to accompanying drawings.

Embodiments of this application provide a message interception method and apparatus, to effectively intercept an unwanted message, prevent a message from arriving at a called terminal device, and reduce a waste of network traffic of the terminal device. The method and the apparatus in this application are based on a same technical concept. Because a problem-resolving principle of the method is similar to a problem-resolving principle of the apparatus, for implementations of the apparatus and the method, refer to each other. No repeated description is provided.

The following explains and describes some terms in this application.
(1) 5G messages are an upgrade of SMS services and are basic telecommunication services provided by operators. Based on an internet protocol (internet protocol, IP) technology, a leap in service experience is implemented, more media formats are supported, and presentation forms are richer.
(2) In descriptions of this application, terms such as "first" and "second" are merely used for distinguishing and description, but should not be understood as indicating or implying relative importance, or should not be understood as indicating or implying a sequence.
(3) In the descriptions of this application, "at least one (type)" means one or more (types), and "a plurality of (types)" means two or more (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.
(4) In the descriptions of this application, the term "and/or" describes an association relationship between associated objects, and indicates that three relationships may exist. For example, A and/or B may indicate the following cases: Only A exists, both A and B exist, and only B exists, where A and B may be singular or plural. "/" indicates "or". For example, a/b indicates a or b.

To describe technical solutions in embodiments of this application more clearly, the following describes the message interception method and apparatus in embodiments of this application in detail with reference to the accompanying drawings.

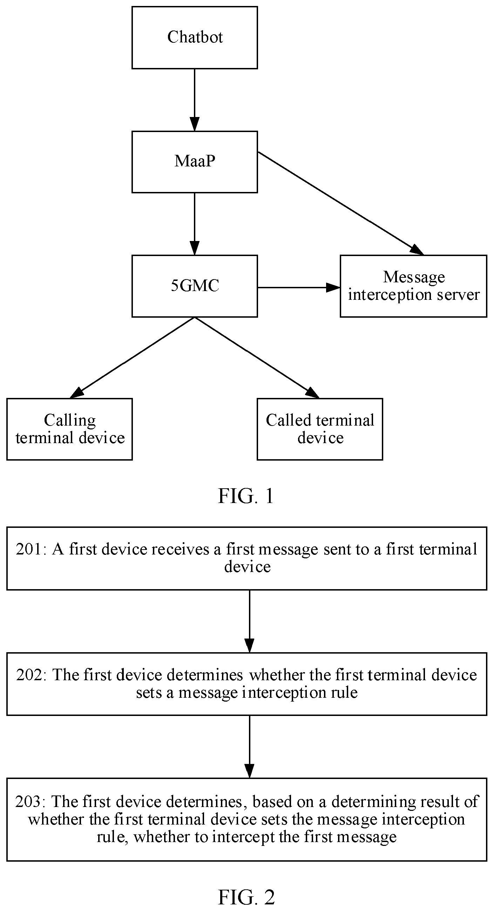

FIG. 1 shows an architecture of a possible system to which a message interception method provided in this application is applicable. The system may include a chatbot (chatbot), a messaging as a platform (messaging as a platform, MaaP), a 5G message center (5th generation message center, 5GMC), a message interception server, and a terminal device. As shown in FIG. 1, the terminal device includes a calling terminal device and a called terminal device. Details are as follows:
The chatbot is used to process a specific chatbot service and provide a specific service based on a request of the terminal device.

The MaaP is responsible for chatbot access processing.

The 5GMC is responsible for storage and forwarding processing of a 5G message.

The message interception server is responsible for message interception rule management and message interception processing. Optionally, the message interception server may be implemented through the chatbot. Optionally, the message interception server may be implemented through another entity, or may be implemented in another manner. This is not limited in this application. It should be understood that the message interception server may also be referred to as another name. This is not limited in this application.

The calling terminal device is configured to send a message, for example, send the 5G message.

The called terminal device is configured to receive a message, for example, receive the 5G message. For example, the called terminal device may receive the 5G message from the calling terminal device, or may receive the 5G message from the chatbot.

For example, the terminal device may also be referred to as a user equipment (user equipment, UE), a mobile station, a mobile terminal, or the like. The terminal device may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, an autonomous driving scenario, a telemedicine scenario, a smart grid scenario, a smart furniture scenario, a smart office scenario, a smart wear scenario, a smart transportation scenario, and a smart city scenario. The terminal device may include various handheld devices, vehicle-mounted devices, wearable devices, or computing devices that have a wireless communication function, or other processing devices connected to a wireless modem. The terminal device may be a mobile station (mobile station, MS), a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a mobile phone, a tablet computer, a computer having a wireless transceiver function, a vehicle, an uncrewed aerial vehicle, a helicopter, an airplane, a ship, a robot, a robotic arm, a smart home device, or the like.

It should be noted that FIG. 1 shows only an example of a system for intercepting a 5G message, and is not intended to limit this application.

Currently, in a 5G message interception solution, the terminal device can determine whether to intercept a 5G message only after receiving the 5G message, and actually, message content has been delivered to the terminal device. This wastes network traffic. Based on this, embodiments of this application provide a message interception method, and before a message arrives at a terminal device, whether the message needs to be intercepted may be determined, so that a waste of network traffic of the terminal device can be avoided.

In the following embodiments, a first device and a first terminal device are used as examples to describe the message interception method provided in this application. An operation performed by the first device may also be implemented through a processor in the first device, a chip, a chip system, a functional module, or the like. This is not limited in this application. An operation performed by the first terminal device may also be implemented through a processor in the first terminal device, a chip, a chip system, a functional module, or the like. This is not limited in this application.

Based on the foregoing descriptions, an embodiment of this application provides a message interception method. As shown in FIG. 2, a procedure of the method may include the following steps.

Step 201: A first device receives a first message sent to a first terminal device.

For example, the first message may be a 5G message. The first device may be a 5GMC or the like.

In an optional implementation, the first device may receive the first message from a calling terminal device, or may receive the first message from a chatbot. When the first message is from the chatbot, the chatbot sends the first message to the first device through a MaaP.

Optionally, after the first device receives the first message, the first device may return a message in response to the first message to the calling terminal device or the chatbot.

In a possible manner, before the first device receives the first message sent to the first terminal device, the first terminal device first sets a message interception rule. Specifically, the first terminal device sends, to the first device, a message including the message interception rule set by the first terminal device, the first device sends, to a second device, the message including the message interception rule set by the first terminal device, and the second device stores the message interception rule set by the first terminal device. Optionally, the first terminal device may send, to the first device based on a system in package (system in package, SIP) protocol, the message including the message interception rule set by the first terminal device.

Further, the second device sends second indication information to the first device, where the second indication information indicates that the first terminal device sets the message interception rule. The first device stores a correspondence between the first terminal device and the message interception rule that is set.

For example, that the first device stores the correspondence between the first terminal device and the message interception rule that is set may be implemented in a form of a table, and the first device stores, in the table, a correspondence between an identifier of the first terminal device and the message interception rule that is set. It should be understood that the first device may alternatively store, in another manner, the correspondence between the first terminal device and the message interception rule that is set. This is not limited in this application.

The first device may store information about whether a plurality of terminal devices set the message interception rule, for example, the correspondence between the first terminal device and the message interception rule that is set, a correspondence between a second terminal device and the message interception rule that is not set, and a correspondence between a third terminal device and the message interception rule that is set. After storing the correspondence between the first terminal device and the message interception rule that is set, the first device may further return a message in response to the second indication information to the second device.

Optionally, the second device may implement a processing process of the second device through the chatbot. Further, the second device may access a 5G message system through the MaaP. Before the first terminal device sends, to the first device, the message including the message interception rule set by the first terminal device, the first terminal device may find the second device by searching for a chatbot name "second device" or a corresponding chatbot identifier.

When the second device implements the processing process through the chatbot, the first device may send, to the MaaP, the message including the message interception rule set by the first terminal device, and then the MaaP sends, to the second device, the message including the message interception rule set by the first terminal device.

Optionally, the first device may send, to the MaaP based on a hypertext transfer protocol (hypertext transfer protocol, HTTP), the message including the message interception rule set by the first terminal device, and the MaaP sends, to the second device based on the HTTP protocol, the message including the message interception rule set by the first terminal device.

Step 202: The first device determines whether the first terminal device sets the message interception rule.

In an optional implementation, the first device may determine, according to the following method, whether the first terminal device sets the message interception rule: The first device determines, based on a correspondence between a terminal device and whether a message interception rule is set, whether the first terminal device sets the message interception rule.

For example, when the first terminal device correspondingly sets the message interception rule in the correspondence stored by the first device, the first device determines that the first terminal device sets the message interception rule; or when the first terminal device correspondingly does not set the message interception rule in the correspondence stored by the first device, the first device determines that the first terminal device does not set the message interception rule.

Step 203: The first device determines, based on a determining result of whether the first terminal device sets the message interception rule, whether to intercept the first message.

In an optional implementation, if the first terminal device does not set the message interception rule, the first device determines not to intercept the first message; or if the first terminal device sets the message interception rule, the first device sends the first message to the second device, receives first indication information from the second device, and determines, based on the first indication information, whether to intercept the first message, where the first indication information indicates whether to intercept the first message.

For example, after the second device receives, from the first device, the first message sent to the first terminal device, the second device determines, based on the message interception rule corresponding to the first terminal device, whether to intercept the first message, and further indicates, by using the first indication information, the first device whether to intercept the first message.

The message interception rule may include one or more of the following: a blacklist, a keyword, a message type, a message size, or the like. The message type may alternatively be described as a media type or the like, for example, including a picture, a video, or a compressed packet, for example, a moving picture experts group audio layer-3 (moving picture experts group audio layer-3, MP3). The message size may alternatively be described as a media size or the like.

For example, when the message interception rule of the first terminal device is intercepting a message whose media type is a picture, the second device determines, by determining whether the message type of the first message is a picture, whether to intercept the first message. For example, when the first message is a picture, the second device determines to intercept the first message, and the first indication information indicates to intercept the first message; or when the first message is not a picture, the second device determines not to intercept the first message, and the first indication information indicates not to intercept the first message.

For another example, when the message interception rule of the first terminal device is intercepting a message whose message size exceeds 10 megabytes (M), the second device determines, by determining whether the message size of the first message exceeds 10M, whether to intercept the first message. For example, when the message size of the first message exceeds 10 M, the second device determines to intercept the first message, and the first indication information indicates to intercept the first message; or when the size of the first message does not exceed 10 M, the second device determines not to intercept the first message, and the first indication information indicates not to intercept the first message.

For still another example, when the message interception rule of the first terminal device is intercepting a message whose message type is a picture and whose message size exceeds 10 M, interception determining of the first message may be implemented in combination with the foregoing two examples, and details are not described again.

It should be understood that the foregoing is merely an example, and there may be another message interception rule. This is not limited in this application.

Based on the foregoing interception rule, not only interception of the blacklist and the keyword can be set, but also interception of a plurality of manners such as the message type (the picture, the video, the compressed packet, or the like) and the message size can be set, so that interception is more flexible, and interception effect is better.

When the first indication information indicates not to intercept the first message, the first device determines not to intercept the first message. Further, the first device may send the first message to the first terminal device. When the first indication information indicates to intercept the first message, the first device determines to intercept the first message. Further, the first device deletes the first message. In this way, the first message is intercepted at the first device, and is not delivered to the first terminal device, so that a waste of network traffic of the first terminal device can be avoided.

According to the message interception method provided in this embodiment of this application, before the message arrives at the terminal device, whether the message needs to be intercepted may be determined, so that the waste of network traffic of the terminal device can be avoided.

According to the foregoing embodiment, the following describes in detail, by using a specific example, the message interception method provided in this embodiment of this application. In the following example, an example in which the first message is a 5G message is used for description, and an example in which the second device is described as a message interception server is used for description. The message interception server is implemented through the chatbot, and accesses the 5G message system through the MaaP. An example in which the first device is a 5GMC is used for description, and an example in which the terminal device is a UE is used for description. Specifically, the following describes in detail the message interception method provided in this embodiment of this application through two procedures: setting of the message interception rule and message interception processing.

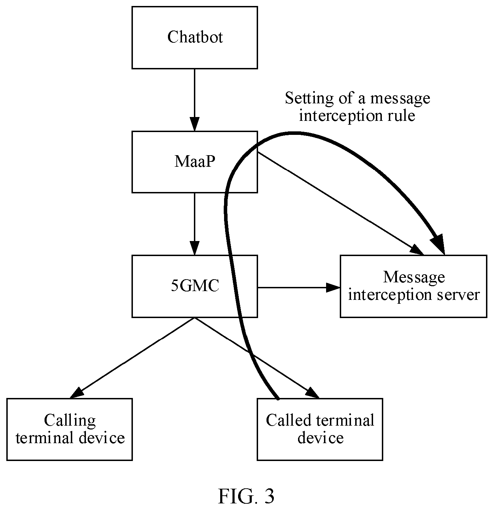

In an example, the UE accesses the message interception server through the 5GMC and the MaaP to set the message interception rule, for example, a diagram of setting the message interception rule shown in FIG. 3. As a chatbot with a special function (providing a message interception service), the message interception server accesses the 5G message system through the MaaP. The UE may find the message interception server by searching for a chatbot name "message interception server" or a corresponding chatbot ID. The UE interacts with the chatbot (the message interception server) to perform operations such as setting, viewing, and modifying the message interception rule. The interaction procedure between the UE and the message interception server is consistent with an interaction procedure between the UE and another service chatbot.

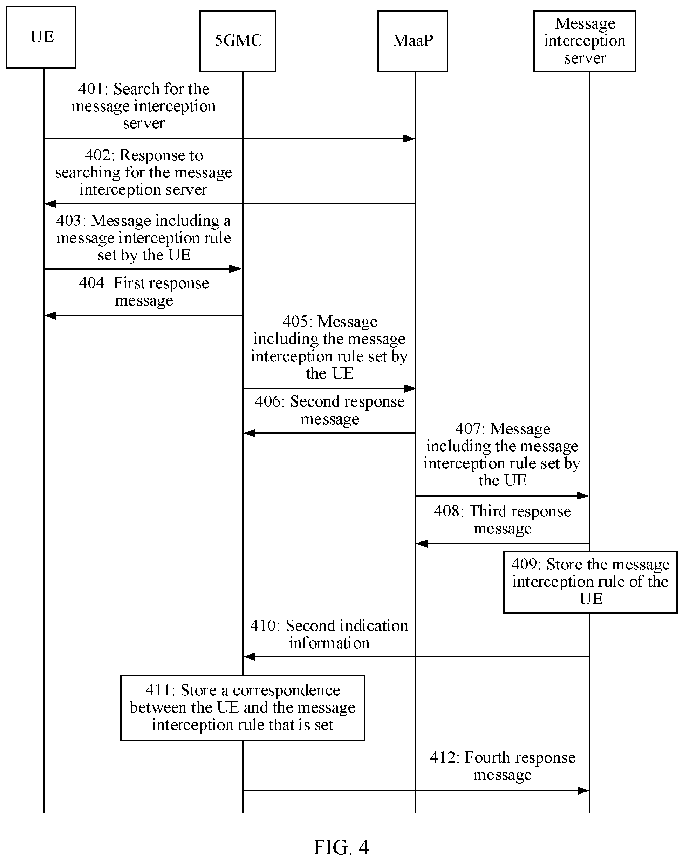

For example, as a Chatbot, the message interception server has accessed the 5G message system through the MaaP, and the UE may find, through searching, the message interception server through the chatbot, and interact with the message interception server. A procedure in which the UE sets the message interception rule may be shown in FIG. 4, and may specifically include the following steps.

Step 401: The UE searches the MaaP for the message interception server. For example, the UE may search the MaaP for the message interception server through the chatbot.

Step 402: The MaaP returns, to the UE, a response to searching for the message interception server. Step 402 is an optional step.

Step 403: The UE sends, to the 5GMC, the message including the message interception rule set by the UE. For example, the UE may send, to the 5GMC by using a SIP protocol, the message including the message interception rule set by the UE.

Step 404: The 5GMC sends a first response message to the UE, where the first response message is for responding to the message including the message interception rule set by the UE. Step 404 is an optional step.

Step 405: The 5GMC sends, to the MaaP, the message including the message interception rule set by the UE. For example, the 5GMC may send, to the MaaP by using an HTTP protocol, the message including the message interception rule set by the UE.

Step 406: The MaaP sends a second response message to the 5GMC, where the second response message is for responding to the message including the message interception rule set by the UE. Step 406 is an optional step.

Step 407: The MaaP sends, to the message interception server, the message including the message interception rule set by the UE. For example, the MaaP may send, to the message interception server by using an HTTP protocol, the message including the message interception rule set by the UE.

Step 408: The message interception server sends a third response message to the MaaP, where the third response message is for responding to the message including the message interception rule set by the UE. Step 408 is an optional step.

Step 409: The message interception server stores the message interception rule of the UE.

Step 410: The message interception server sends the second indication information to the 5GMC, where the second indication information is for indicate that the UE sets the message interception rule. For example, the second indication information may be described as a user interception identifier.

Step 411: The 5GMC stores a correspondence between the UE and the message interception rule that is set.

Step 412: The 5GMC sends a fourth response message to the message interception server, where the fourth response message is for responding to the second indication information. Step 412 is an optional step.

Based on the foregoing procedure, the UE may complete setting of the message interception rule, so that the message interception server subsequently determines whether a to-be-received message is intercepted. The UE sets the message interception rule in the message interception server, and data is stored in the message interception server. This is applicable to a plurality of UEs that meet a user requirement, and the message interception rule does not need to be reset on each UE.

It may be understood that, a procedure of viewing the message interception rule is similar to the foregoing procedure of the message interception rule, and for the procedure of viewing the message interception rule and the foregoing procedure of the message interception rule, refer to each other. Details are not described herein again.

It should be understood that some UEs may set the message interception rule through the foregoing procedure, and some UEs may not set the message interception rule, that is, do not perform an operation of the foregoing procedure.

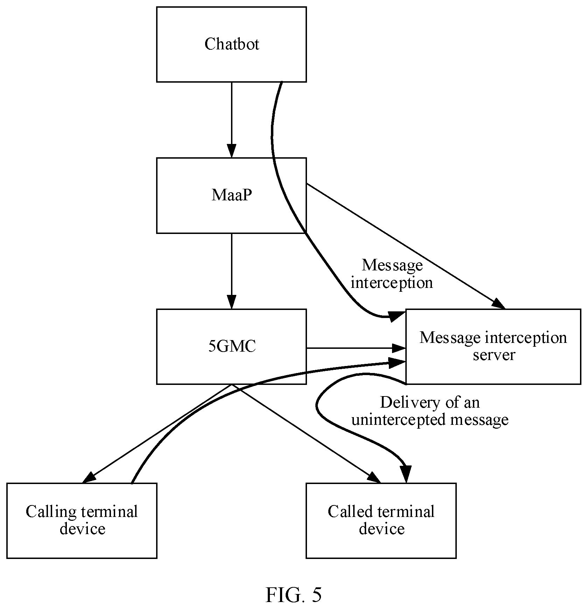

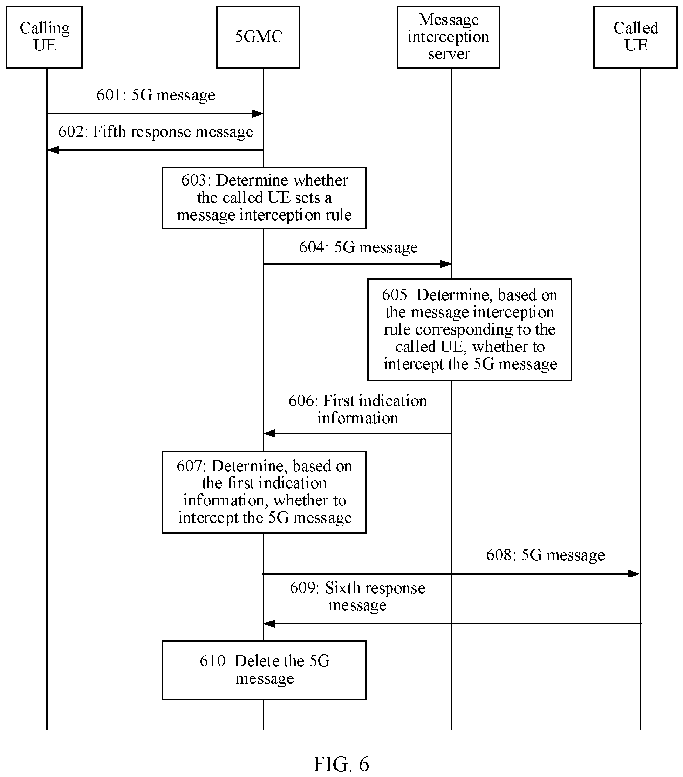

In another example, as shown in FIG. 5, when the message is submitted to the 5GMC, the 5GMC queries whether a called UE sets the message interception rule, and performs the following corresponding processing: If the called UE does not set the message interception rule, the 5GMC directly delivers a response message; or if the called UE sets the message interception rule, the 5GMC forwards a response message to the message interception server for rule matching, the message interception server returns a result of whether to intercept the message to the 5GMC, and the 5GMC determines whether to deliver the message based on the result. (If the message needs to be intercepted, the 5GMC ends processing of the message; or if the message does not need to be intercepted, the 5GMC continues to process the message.) For example, a procedure of message interception processing may be shown in FIG. 6, and the procedure may include the following steps.

Step 601: A calling UE sends a 5G message (namely, the first message in the foregoing embodiment) to the 5GMC.

In FIG. 6, only an example in which the calling UE sends the 5G message is used for description. Optionally, the chatbot may send the 5G message to the 5GMC. Specifically, the chatbot sends the 5G message to the 5GMC through the MaaP.

The 5G message is a message sent to a called UE (namely, the first terminal device in the foregoing embodiment).

Step 602: The 5GMC sends a fifth response message to the calling UE, where the fifth response message is for responding to the 5G message. Step 602 is an optional step.

Step 603: The 5GMC determines whether the called UE sets the message interception rule. If the 5GMC determines that the called UE sets the message interception rule, step 604 to step 606 are performed. If the 5GMC determines that the called UE does not set the message interception rule, step 608 is performed.

Step 604: The 5GMC sends the 5G message to the message interception server.

Step 605: The message interception server determines whether the called UE sets the message interception rule is met, that is, the message interception server determines, according to the message interception rule corresponding to the called UE, whether to intercept the 5G message.

Specifically, for specific content of the message interception rule corresponding to the called UE and a method for determining, by the message interception server according to the message interception rule corresponding to the called UE, whether to intercept the 5G message, refer to related descriptions in the embodiment shown in FIG. 2. Details are not described herein again.

Step 606: The message interception server sends the first indication information to the 5GMC, where the first indication information indicates whether to intercept the 5G message.

Step 607: The 5GMC determines, based on the first indication information, whether to intercept the 5G message. If the 5GMC determines not to intercept the 5G message, step 608 is performed; or if the 5GMC determines to intercept the 5G message, step 610 is performed.

Step 608: The 5GMC sends the 5G message to the called UE.

Step 609: The called UE sends a sixth response message to the 5GMC, where the sixth response message is for responding to the 5G message. Step 609 is an optional step. Step 610: The 5GMC deletes the 5G message.

According to the foregoing example, before the 5G message arrives at the called UE, whether the 5G message needs to be intercepted may be determined, so that a waste of network traffic of the called UE can be avoided.

It should be noted that, in this application, only an example in which a 5G message is intercepted is used for description. Optionally, for a method for intercepting a non-5G message, the message interception method in this application may also be used, to determine whether to intercept a message through a device independent of a called user, so that before the message arrives at the called user, the message is intercepted, thereby avoiding a waste of network traffic of the called user.

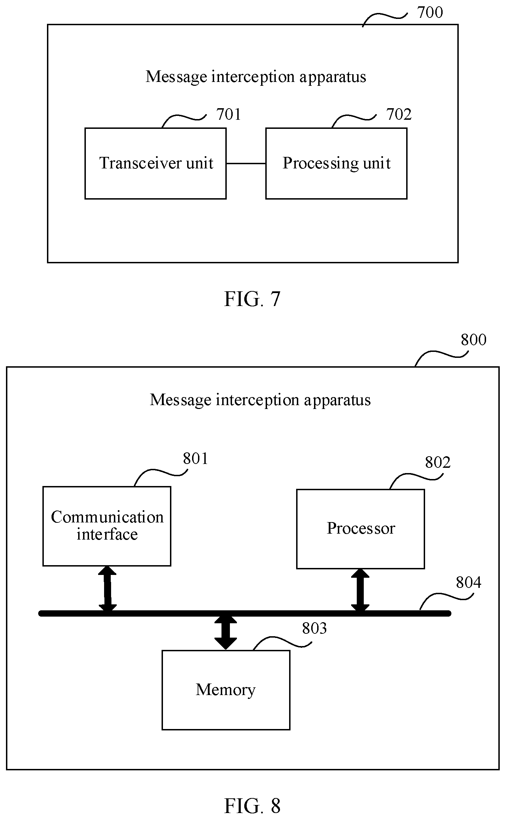

According to the foregoing embodiment, an embodiment of this application further provides a message interception apparatus. Refer to FIG. 7. The message interception apparatus 700 may include a transceiver unit 701 and a processing unit 702. The transceiver unit 701 may be configured to receive and send a message and the like. The processing unit 702 may control and manage an action of the message interception apparatus 700. The processing unit 702 may further control an operation performed by the transceiver unit 701.

For example, the message interception apparatus 700 may be the first device in the foregoing embodiment, a processor in the first device, a chip, a chip system, a functional module, or the like. Alternatively, the message interception apparatus 700 may be the second device in the foregoing embodiment, a processor in the second device, a chip, a chip system, a functional module, or the like.

In an embodiment, when the message interception apparatus 700 is configured to implement a function of the first device (for example, a 5GMC) in the foregoing embodiment, the following may be included: The transceiver unit 701 may be configured to receive a first message sent to a first terminal device; and the processing unit 702 may be configured to determine whether the first terminal device sets a message interception rule; and determine, based on a determining result of whether the first terminal device sets the message interception rule, whether to intercept the first message.

In an optional implementation, when determining whether the first terminal device sets the message interception rule, the processing unit 702 may be configured to: determine, based on a correspondence between a terminal device and whether a message interception rule is set, whether the first terminal device sets the message interception rule.

For example, when determining, based on the determining result of whether the first terminal device sets the message interception rule, whether to intercept the first message, the processing unit 702 may determine not to intercept the first message when the first terminal device does not set the message interception rule; or when the first terminal device sets the message interception rule, control the transceiver unit 701 to send the first message to a second device, control the transceiver unit 701 to receive first indication information from the second device, and determine, based on the first indication information, whether to intercept the first message, where the first indication information indicates whether to intercept the first message.

Optionally, the transceiver unit 701 may be further configured to: when the processing unit determines not to intercept the first message, send the first message to the first terminal device; or the processing unit 702 may be further configured to: when determining to intercept the first message, delete the first message.

In a possible manner, before the transceiver unit 701 receives the first message sent to the first terminal device, the transceiver unit 701 may further receive second indication information from the second device, where the second indication information indicates that the first terminal device sets the message interception rule. The processing unit 702 may be further configured to store a correspondence between the first terminal device and the message interception rule that is set.

In an example, before receiving the second indication information from the second device, the transceiver unit 701 may further receive, from the first terminal device, a message including the message interception rule set by the first terminal device; and send, to the second device, the message including the message interception rule set by the first terminal device.

For example, the message interception rule may include one or more of the following: a blacklist, a keyword, a message type, a message size, or the like.

In an embodiment, when the message interception apparatus 700 is configured to implement a function of the second device (for example, a message interception server) in the foregoing embodiment, the following may be included: The transceiver unit 701 may be configured to receive, from the first device, a first message sent to a first terminal device; and the processing unit 702 is configured to determine, based on a message interception rule corresponding to the first terminal device, whether to intercept the first message, where the transceiver unit 701 may be further configured to send first indication information to the first device, where the first indication information indicates whether to intercept the first message.

Optionally, before receiving, from the first device, the first message sent to the first terminal device, the transceiver unit 701 may further send second indication information to the first device, where the second indication information indicates that the first terminal device sets the message interception rule.

Optionally, before sending the second indication information to the first device, the transceiver unit 701 may further receive, from the first device, a message including the message interception rule set by the first terminal device. Correspondingly, the processing unit 702 may be further configured to store the message interception rule set by the first terminal device.

For example, the message interception rule may include one or more of the following: a blacklist, a keyword, a message type, a message size, or the like.

It should be noted that, in embodiments of this application, division into the units is an example, and is merely a logical function division. During actual implementation, another division manner may be used. Functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a computer software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

According to the foregoing embodiment, an embodiment of this application further provides a message interception apparatus. Refer to FIG. 8. The message interception apparatus 800 may include a communication interface 801 and a processor 802. Optionally, the message interception apparatus 800 may further include a memory 803. The memory 803 may be disposed inside the message interception apparatus 800, or may be disposed outside the message interception apparatus 800. The processor 802 may control the communication interface 801 to receive and send a message and the like.

Specifically, the processor 802 may be a central processing unit (central processing unit, CPU), a network processor (network processor, NP), or a combination of a CPU and an NP. The processor 802 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof.

The communication interface 801, the processor 802, and the memory 803 are connected to each other. Optionally, the communication interface 801, the processor 802, and the memory 803 are connected to each other through a bus 804. The bus 804 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is for representing the bus in FIG. 8, but this does not mean that there is only one bus or only one type of bus.

In an optional implementation, the memory 803 is configured to store a program and the like. Specifically, the program may include program code, and the program code includes computer operation instructions. The memory 803 may include a RAM, or may further include a non-volatile memory (non-volatile memory), for example, one or more magnetic disk memories. The processor 802 executes an application program stored in the memory 803 to implement the foregoing function, to implement the function of the message interception apparatus 800.

For example, the message interception apparatus 800 may be the first device (for example, the 5GMC) in the foregoing embodiments, or may be the second device (for example, the message interception server) in the foregoing embodiments.

In an embodiment, when the message interception apparatus 800 implements a function of the first device (for example, the 5GMC) in the foregoing method embodiments, the communication interface 801 may implement receiving and sending operations performed by the first device (for example, the 5GMC) in the foregoing method embodiments, and the processor 802 may implement another operation other than the receiving and sending operations performed by the first device (for example, the 5GMC) in the foregoing method embodiments. For detailed related descriptions, refer to related descriptions in the foregoing embodiments. Details are not described herein again.

In an embodiment, when the message interception apparatus 800 implements a function of the second device (for example, the message interception server) in the foregoing method embodiments, the communication interface 801 may implement receiving and sending operations performed by the second device (for example, the message interception server) in the foregoing method embodiments, and the processor 802 may implement another operation other than the receiving and sending operations performed by the second device (for example, the message interception server) in the foregoing method embodiments. For detailed related descriptions, refer to related descriptions in the foregoing embodiments. Details are not described herein again.

According to the foregoing embodiment, an embodiment of this application provides a system. The system may include the first device, the second device, and the like in the foregoing embodiments.

An embodiment of this application further provides a computer-readable storage medium. The computer-readable storage medium is configured to store a computer program. When the computer program is executed by a computer, the computer may implement the message interception method provided in the method embodiments.

An embodiment of this application further provides a computer program product. The computer program product is configured to store a computer program. When the computer program is executed by a computer, the computer may implement the message interception method provided in the method embodiments.

An embodiment of this application further provides a chip. The chip includes a processor. The processor is coupled to a memory, and is configured to invoke a program in the memory, so that the chip implements the message interception method provided in the method embodiments.

An embodiment of this application further provides a chip. The chip is coupled to a memory, and the chip is configured to implement the message interception method provided in the method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope of protection defined by the following claims and their equivalent technologies.

## Claims

1. A message interception method, comprising:
receiving, by a first device, a first message sent to a first terminal device;
determining, by the first device, whether the first terminal device sets a message interception rule; and
determining, by the first device based on a determining result of whether the first terminal device sets the message interception rule, whether to intercept the first message.

2. The method according to claim 1, wherein the determining, by the first device, whether the first terminal device sets a message interception rule comprises:
determining, by the first device based on a correspondence between a terminal device and whether a message interception rule is set, whether the first terminal device sets the message interception rule.

3. The method according to claim 1 or 2, wherein the determining, by the first device based on a determining result of whether the first terminal device sets the message interception rule, whether to intercept the first message comprises:
if the first terminal device does not set the message interception rule, determining, by the first device, not to intercept the first message; or
if the first terminal device sets the message interception rule, sending, by the first device, the first message to a second device, receiving first indication information from the second device, and determining, based on the first indication information, whether to intercept the first message, wherein the first indication information indicates whether to intercept the first message.

4. The method according to any one of claims 1 to 3, wherein the method further comprises:
when the first device determines not to intercept the first message, sending, by the first device, the first message to the first terminal device; or
when the first device determines to intercept the first message, deleting, by the first device, the first message.

5. The method according to any one of claims 1 to 4, wherein before the receiving, by a first device, a first message sent to a first terminal device, the method further comprises:
receiving, by the first device, second indication information from the second device, wherein the second indication information indicates that the first terminal device sets the message interception rule; and
storing, by the first device, a correspondence between the first terminal device and the message interception rule that is set.

6. The method according to claim 5, wherein before the receiving, by the first device, second indication information from the second device, the method further comprises:
receiving, by the first device from the first terminal device, a message comprising the message interception rule set by the first terminal device; and
sending, by the first device to the second device, the message comprising the message interception rule set by the first terminal device.

7. The method according to any one of claims 1 to 6, wherein the message interception rule comprises one or more of the following: a blacklist, a keyword, a message type, or a message size.

8. A message interception method, comprising:
receiving, by a second device from a first device, a first message sent to a first terminal device;
determining, by the second device based on a message interception rule corresponding to the first terminal device, whether to intercept the first message; and
sending, by the second device, first indication information to the first device, wherein the first indication information indicates whether to intercept the first message.

9. The method according to claim 8, wherein before the receiving, by a second device from the first device, a first message sent to a first terminal device, the method further comprises:
sending, by the second device, second indication information to the first device, wherein the second indication information indicates that the first terminal device sets the message interception rule.

10. The method according to claim 9, wherein before the sending, by the second device, second indication information to the first device, the method further comprises:
receiving, by the second device from the first device, a message comprising the message interception rule set by the first terminal device; and
storing, by the second device, the message interception rule set by the first terminal device.

11. The method according to any one of claims 8 to 10, wherein the message interception rule comprises one or more of the following: a blacklist, a keyword, a message type, or a message size.

12. A message interception apparatus, comprising:
a transceiver unit, configured to receive a first message sent to a first terminal device; and
a processing unit, configured to: determine whether the first terminal device sets a message interception rule; and
determine, based on a determining result of whether the first terminal device sets the message interception rule, whether to intercept the first message.

13. The apparatus according to claim 12, wherein when determining whether the first terminal device sets the message interception rule, the processing unit is configured to:
determine, based on a correspondence between a terminal device and whether a message interception rule is set, whether the first terminal device sets the message interception rule.

14. The apparatus according to claim 12 or 13, wherein when determining, based on the determining result of whether the first terminal device sets the message interception rule, whether to intercept the first message, the processing unit is configured to:
if the first terminal device does not set the message interception rule, determine not to intercept the first message; or
if the first terminal device sets the message interception rule, control the transceiver unit to send the first message to a second device, control the transceiver unit to receive first indication information from the second device, and determine, based on the first indication information, whether to intercept the first message, wherein the first indication information indicates whether to intercept the first message.

15. The apparatus according to any one of claims 12 to 14, wherein
the transceiver unit is further configured to:
when the processing unit determines not to intercept the first message, send the first message to the first terminal device; or
the processing unit is further configured to:
when determining to intercept the first message, delete the first message.

16. The apparatus according to any one of claims 12 to 15, wherein before the transceiver unit receives the first message sent to the first terminal device, the transceiver unit is further configured to:
receive second indication information from the second device, wherein the second indication information indicates that the first terminal device sets the message interception rule; and
the processing unit is further configured to store a correspondence between the first terminal device and the message interception rule that is set.

17. The apparatus according to claim 16, wherein before receiving the second indication information from the second device, the transceiver unit is further configured to:
receive, from the first terminal device, a message comprising the message interception rule set by the first terminal device; and
send, to the second device, the message comprising the message interception rule set by the first terminal device.

18. The apparatus according to any one of claims 12 to 17, wherein the message interception rule comprises one or more of the following: a blacklist, a keyword, a message type, or a message size.

19. A message interception apparatus, comprising:
a transceiver unit, configured to receive, from the first device, a first message sent to a first terminal device; and
a processing unit, configured to determine, based on a message interception rule corresponding to the first terminal device, whether to intercept the first message, wherein
the transceiver unit is further configured to send first indication information to the first device, wherein the first indication information indicates whether to intercept the first message.

20. The apparatus according to claim 19, wherein before receiving, from the first device, the first message sent to the first terminal device, the transceiver unit is further configured to:
send second indication information to the first device, wherein the second indication information indicates that the first terminal device sets the message interception rule.

21. The apparatus according to claim 20, wherein before sending the second indication information to the first device, the transceiver unit is further configured to:
receive, from the first device, a message comprising the message interception rule set by the first terminal device; and
the processing unit is further configured to:
store the message interception rule set by the first terminal device.

22. The apparatus according to any one of claims 19 to 21, wherein the message interception rule comprises one or more of the following: a blacklist, a keyword, a message type, or a message size.

23. A message interception apparatus, comprising a processor and a communication interface, wherein
the communication interface is configured to receive and send a message; and
the processor is coupled to a memory, and is configured to invoke computer instructions in the memory, to perform the method according to any one of claims 1 to 7 through the communication interface.

24. A message interception apparatus, comprising a processor and a communication interface, wherein
the communication interface is configured to receive and send a message; and
the processor is coupled to a memory, and is configured to invoke computer instructions in the memory, to perform the method according to any one of claims 8 to 11 through the communication interface.

25. A computer-readable storage medium, wherein the computer-readable storage medium stores computer-executable instructions; and when the computer-executable instructions are invoked by a computer, the method according to any one of claims 1 to 7 or the method according to any one of claims 8 to 11 is performed.

26. A computer program product, comprising instructions, wherein when the instructions are run on a computer, the method according to any one of claims 1 to 7 or the method according to any one of claims 8 to 11 is performed.

27. A chip, wherein the chip is coupled to a memory, and is configured to read and execute program instructions stored in the memory, to implement the method according to any one of claims 1 to 7 or the method according to any one of claims 8 to 11.
